# EUROPEAN PATENT APPLICATION

(11) **EP 4 317 095 A1**
(43) Date of publication of application: **07.02.2024**
(21) Application number: 22773868.9
(22) Date of filing: 04.01.2022
(51) Int. Cl.: C03C 3/097, C03C 3/118, C03C 4/00

(54) **OPTICAL GLASS, OPTICAL ELEMENT, AND OPTICAL INSTRUMENT**

(30) Priority: 23.03.2021 CN 202110308615
(71) Applicant: CDGM Glass Co. Ltd., Chengdu, Sichuan 610100 (CN)
(72) Inventor: MAO, Lulu, Chengdu, Sichuan 610100 (CN); HAO, Liangzhen, Chengdu, Sichuan 610100 (CN); KUANG, Bo, Chengdu, Sichuan 610100 (CN); MA, He, Chengdu, Sichuan 610100 (CN); MA, Zhiyuan, Chengdu, Sichuan 610100 (CN); YANG, Famao, Chengdu, Sichuan 610100 (CN)
(74) Representative: Bandpay & Greuter
(86) International application number: PCT/CN2022/070075
(87) International publication number: WO 2022/199203

(57) **Abstract**

The present invention provides an optical glass, wherein components of the optical glass are represented by weight percentage, comprising: 55-70% of SiO₂; 2-18% of B₂O₃; 1-20% of ZnO; 4-30% of La₂O₃+Y₂O₃+Gd₂O₃; 0.5-20% of Ta₂O₅+Nb₂O₅+TiO₂+ZrO₂; and 3-15% of Li₂O+Na₂O+K₂O, in which (La₂O₃+Y₂O₃+Gd₂O₃)/(Ta₂O₅+Nb₂O₅+TiO₂+ZrO₂) is 1.0-13.0. Through rational component design, the optical glass of the present invention has high UV light transmittance and excellent UV irradiation resistance performance while having the desired refractive index and Abbe number.

## Description

### Technical Field

The present invention relates to an optical glass, in particular to an optical glass having a refractive index of 1.51-1.58 and an Abbe number of 55-65, as well as an optical element and an optical instrument made of the optical glass.

### Background

In recent years, UV light in 320-400nm band has been widely used in the fields of anti-counterfeiting banknote inspection, food packaging, metal detection, blood analysis, UV packaging, UV lithography and UV exposure systems. Along with the rapid development of semiconductor manufacturing, UV packaging, UV lithography and UV exposure systems pose higher and higher requirements on precision. Taking the objective lens system of UV lithography machine as an example, it is necessary to combine several or even dozens of large-caliber lenses with different refractive index and Abbe number to achieve high-precision effects. High transmittance and high irradiation resistance features are necessary in the UV optical system of 320-400nm band. Taking lithography or exposure and other high-precision optical systems as an example, in order to obtain higher yields, it is necessary to use a kilowatt-level or higher power UV light source, and under such a high power, the glass material is required to have a better UV irradiation resistance performance. If the transmittance of the glass is decreased under UV band irradiation, the glass will heat up seriously, resulting in refractive index deviation and surface deformation of the lens set, thereby decreasing the imaging quality.

The optical glass with refractive index of 1.51-1.58 and Abbe number of 55-65 belongs to barium crown glass according to the Chinese optical glass classification standard. In the prior art, the transmittance of the barium crown glass in the UV band is far below the usage requirements of the lithography machine, especially the most commonly used 365nm band. After irradiation, the transmittance of the glass will be seriously decreased, and it is difficult to be applied in the UV irradiation apparatus.

### Summary

A technical problem to be solved by the present invention is to provide an optical glass with high UV light transmittance and excellent UV irradiation resistance performance.

To solve the technical problem, the technical scheme of the present invention provides:
An optical glass, wherein the components are represented by weight percentage, comprising: 55-70% of SiO₂; 2-18% of B₂O₃; 1-20% ofZnO; 4-30% of La₂O₃+Y₂O₃+Gd₂O₃; 0.5-20% of Ta₂O₅+Nb₂O₅+TiO₂+ZrO₂; and 3-15% of Li₂O+Na₂O+K₂O, in which (La₂O₃+Y₂O₃+Gd₂O₃)/(Ta₂O₅+Nb₂O₅+TiO₂+ZrO₂) is 1.0-13.0.

Furthermore, the optical glass, wherein the components are represented by weight percentage, further comprising: 0-15% of BaO+SrO+CaO+MgO; and/or 0-5% of Al₂O₃; and/or 0-3% of F; and/or 0-1% of clarifying agent, and the clarifying agent is one or more of Sb₂O₃, SnO, SnO₂, CeO₂, Cl, and Br.

An optical glass, wherein the components are represented by weight percentage, consisting of: 55-70% of SiO₂; 2-18% of B₂O₃; 1-20% of ZnO, 4-30% of La₂O₃+Y₂O₃+Gd₂O₃; 0.5-20% of Ta₂O₅+Nb₂O₅+TiO₂+ZrO₂; 3-15% of Li₂O+Na₂O+K₂O; 0-15% of BaO+SrO+CaO+MgO; 0-5% of Al₂O₃; 0-3% of F; and 0-1% of clarifying agent, and the clarifying agent is one or more of Sb₂O₃, SnO, SnO₂, CeO₂, Cl and Br.

Furthermore, the optical glass, wherein the components are represented by weight percentage, in which: (La₂O₃+Y₂O₃+Gd₂O₃)/(Ta₂O₅+Nb₂O₅+TiO₂+ZrO₂) is 1.0-13.0, preferably (La₂O₃+Y₂O₃+Gd₂O₃)/(Ta₂O₅+Nb₂O₅+TiO₂+ZrO₂) is 2.0-10.0, more preferably (La₂O₃+Y₂O₃+Gd₂O₃)/(Ta₂O₅+Nb₂O₅+TiO₂+ZrO₂) is 3.0-7.0

Furthermore, the optical glass, wherein the components are represented by weight percentage, in which: La₂O₃/Nb₂O₅ is 3.5-15.0, preferably La₂O₃/Nb₂O₅ is 5.0-14.0, more preferably La₂O₃/Nb₂O₅ is 7.0-13.5

Furthermore, the optical glass, wherein the components are represented by weight percentage, in which: (La₂O₃+Y₂O₃+Gd₂O₃)/SiO₂ is 0.07-0.35, preferably (La₂O₃+Y₂O₃+Gd₂O₃)/SiO₂ is 0.08-0.3, more preferably (La₂O₃+Y₂O₃+Gd₂O₃)/SiO₂ is 0.1-0.25.

Furthermore, the optical glass, wherein the components are represented by weight percentage, in which: (B₂O₃+Al₂O₃)/SiO₂ is 0.05-0.4, preferably (B₂O₃+Al₂O₃)/SiO₂ is 0.08-0.35, more preferably (B₂O₃+Al₂O₃)/SiO₂ is 0.1-0.3.

Furthermore, the optical glass, wherein the components are represented by weight percentage, in which: (BaO+SrO+CaO+MgO)/SiO₂ is 0.01-0.25, preferably (BaO+SrO+CaO+MgO)/SiO₂ is 0.01-0.2, more preferably (BaO+SrO+CaO+MgO)/SiO₂ is 0.02-0.15, further preferably (BaO+SrO+CaO+MgO)/SiO₂ is 0.02-0.1.

Furthermore, the optical glass, wherein the components are represented by weight percentage, in which: (La₂O₃+Y₂O₃+Gd₂O₃)/B₂O₃ is 0.3-6.0, preferably (La₂O₃+Y₂O₃+Gd₂O₃)/B₂O₃ is 0.4-5.0, more preferably (La₂O₃+Y₂O₃+Gd₂O₃)/B₂O₃ is 0.5-3.0.

Furthermore, the optical glass, wherein the components are represented by weight percentage, in which: SiO₂ is 56-68%, preferably SiO₂ is 57-67%; and/or B₂O₃ is 4-16%, preferably B₂O₃ is 5-15%; and/or ZnO is 2-16%, preferably ZnO is 3-12%; and/or La₂O₃+Y₂O₃+Gd₂O₃ is 5-20%, preferably La₂O₃+Y₂O₃+Gd₂O₃ is 7-15%; and/or Ta₂O₅+Nb₂O₅+TiO₂+ZrO₂ is 1-15%, preferably Ta₂O₅+Nb₂O₅+TiO₂+ZrO₂ is 2-10%; and/or Li₂O+Na₂O+K₂O is 5-14%, preferably Li₂O+Na₂O+K₂O is 6-13%; and/or BaO+SrO+CaO+MgO is 1-15%, preferably BaO+SrO+CaO+MgO is 1.5-10%, more preferably BaO+SrO+CaO+MgO is 1.5-8%; and/or Al₂O₃ is 0-4%, preferably Al₂O₃ is 0-3%; and/or F is 0-2%, preferably F is 0-1%; and/or clarifying agent is 0-0.8%, preferably clarifying agent is 0-0.5%, and the clarifying agent is one or more of Sb₂O₃, SnO, SnO_{2,} CeO₂, Cl and Br.

Furthermore, the optical glass, wherein the components are represented by weight percentage, in which: La₂O₃ is 4-25%, preferably La₂O₃ is 6-20%, more preferably La₂O₃ is 7-14%; and/or Gd₂O₃ is 0-8%, preferably Gd₂O₃ is 0-7%, more preferably Gd₂O₃ is 0-5%; and/or Y₂O₃ is 0-10%, preferably Y₂O₃ is 0-8%, more preferably Y₂O₃ is 0-5%; and/or Na₂O is 2-15%, preferably Na₂O is 4-14%, more preferably Na₂O is 5-13%; and/or K₂O is 0-8%, preferably K₂O is 1-6%, more preferably K₂O is 2-5%; and/or Li₂O is 0-5%, preferably Li₂O is 0-4%, more preferably Li₂O is 0-3%.

Furthermore, the optical glass, wherein the components do not contain F; and/or do not contain MgO; and/or do not contain CaO; and/or do not contain Li₂O.

Furthermore, a refractive index n_{d} of the optical glass is 1.51-1.58, preferably 1.52-1.57, more preferably 1.53-1.56, and/or an Abbe number v_{d} is 55-65, preferably 56-63, more preferably 57-60.

Furthermore, τ₃₆₅ₙₘ of the optical glass is above 99.0%, preferably above 99.2%, more preferably above 99.4%, further preferably above 99.5%, and/or Δτ₃₆₅ₙₘ is below 5.0%, preferably below 2.0%, more preferably below 1.0%.

Furthermore, a water resistance stability D_{W} of the optical glass is above Class 2, preferably Class 1; and/or an acid resistance stability D_{A} is above Class 3, preferably above Class 2, more preferably Class 1; and/or a refractive index temperature coefficient dn/dt is below 8.0×10⁻⁶/°C, preferably below 7.0×10⁻⁶/°C, more preferably below 6.0×10⁻⁶/°C, and/or an upper limit of devitrification temperature is below 1300°C, preferably below 1280°C, more preferably below 1250°C, further preferably below 1230°C; and/or bubble degree is above Grade A, preferably above Grade A₀, more preferably Grade A₀₀; and/or stripe degree is above Grade C, preferably above Grade B; and/or Δn_{d} value is below 5×10⁻⁶, preferably below 3×10⁻⁶, more preferably below 2×10⁻⁶.

A glass preform is made of the above-mentioned optical glass.

An optical element, made of the above-mentioned optical glass or made of the above-mentioned glass preform.

An optical instrument, comprising the above-mentioned optical glass, and/or comprising the above-mentioned optical element.

The beneficial effects of the present invention are as follows: through rational component design, the optical glass of the present invention has high UV light transmittance and excellent UV irradiation resistance performance while having the desired refractive index and Abbe number.

### Detailed Description

The implementations of the optical glass provided by the present invention will be described in detail below, but the present invention is not limited to the following implementations. Appropriate changes may be made within the scope of the purpose of the present invention for implementation. In addition, the repeated descriptions will not limit the aim of the invention although with appropriate omissions. In the following, the optical glass of the present invention is sometimes referred to as glass.

### <Optical glass>

Hereinafter, the components (ingredients) of the optical glass provided by the present invention will be described. If not specified herein, the content of each component and the total content are expressed in weight percentage (wt%), that is, the content of each component and the total content are expressed in weight percentage relative to the total glass materials converted into oxide composition. "Converted into oxide composition" therein refers to that the total weight of this oxide is taken as 100% when the oxide, compound salt and hydroxide, used as raw materials for the composition of the optical glass of the present invention, are decomposed and transformed into oxides during melting.

Unless otherwise noted in specific circumstances, the numerical range listed herein includes upper and lower limits, and the words "above" and "below" include the endpoint values as well as all integers and fractions within the range, but not limited to the specific values listed when the range is limited. "And/or" mentioned herein is inclusive. For example, "A and/or B" refers to only A, or only B, or both A and B.

### <Necessary components and optional components>

SiO₂ and B₂O₃ are major network former components of the glass provided by the present invention. The stable structure formed by these two network former components is the basis for achieving high UV light transmittance and excellent chemical stability. If the content of SiO₂ is less than 55%, the transmittance of the glass at 365nm will be low, and it is difficult to reach more than 99.0%, which is fatal to the UV optical system with long optical path and high illumination requirement, such as lithography machine lens and exposure machine prism. Therefore, the lower limit of the SiO₂ content is 55%, preferably 56%, more preferably 57%. If the content of SiO₂ is higher than 70%, the refractive index of the glass will be difficult to meet the design requirements, and meanwhile, the glass needs to be melted at a higher temperature. The higher melting temperature will lead to exponential growth of the erosion of the glass liquid on the crucible, and the rapid rise of the content of ions such as iron (Fe) ion and platinum (Pt) ion that have a strong absorption effect on the UV band will instead lead to the rapid decrease of UV light transmittance, especially the transmittance at 365nm. In addition, excessive content of SiO₂ will also cause excessive high-temperature viscosity of the glass, and the optical uniformity, bubble degree and stripe degree are difficult to meet the design requirements. Therefore, the upper limit of the SiO₂ content is 70%, preferably 68%, more preferably 67%.

An appropriate amount of B₂O₃ can enhance the refractive index of the glass, strengthen the structure of the glass, and improve the UV irradiation resistance performance of the glass. If the content of B₂O₃ is higher than 18%, the erosion of the glass liquid on the crucible will increase rapidly, resulting in a rapid decrease in UV transmittance. If the content of B₂O₃ is less than 2%, the glass will be difficult to melt. Therefore, the content of B₂O₃ is 2-18%, preferably 4-16%, more preferably 5-15%.

Al₂O₃ can enhance the tightness of the internal structure of the glass, and increase the UV transmittance and chemical stability of the glass. However, if the content of Al₂O₃ exceeds 5%, stones are easy to be produced inside the glass, and the internal quality of the glass will deteriorate. Therefore, the content of Al₂O₃ is confined to be below 5%, preferably below 4%, more preferably below 3%.

SiO₂, B₂O₃ and Al₂O₃ can form a glass network. Based on a large number of experimental researches, the inventor has found that when the three network former components coexist, the structure of the glass will undergo complex changes, which will lead to changes in the performances such as high-temperature viscosity and chemical stability of the glass. In some implementations, by controlling the value of (B₂O₃+Al₂O₃)/SiO₂ to be within the range of 0.05-0.4, the glass can be prevented from increasing the high-temperature viscosity while having excellent chemical stability. Therefore, the value of (B₂O₃+Al₂O₃)/SiO₂ is preferably 0.05-0.4, more preferably 0.08-0.35, further preferably 0.1-0.3.

BaO, SrO, CaO and MgO belong to alkaline-earth metal oxides. Traditional barium crown glass contains a large amount of BaO for enhancing the refractive index of the glass, which is also the origin of barium crown glass variety. The inventor has found through researches that although the alkaline-earth metal oxide can enhance the refractive index and stability of the glass, it will make the glass structure not tight enough, resulting in poor UV transmittance and chemical stability of the glass. In the glass of the present invention, if the total content of alkaline-earth metal oxides, i.e., BaO+SrO+CaO+MgO, is higher than 15%, the UV transmittance of the glass will be greatly decreased. Therefore, the total content of alkaline-earth metal oxides, i.e., BaO+SrO+CaO+MgO, in the invention is 0-15%. On the other hand, if BaO+SrO+CaO+MgO is less than 1%, the effect of improving the stability of the glass will not be obvious, and the devitrification tendency of the glass will be increased, which is very unfavorable to the molding of large-sized glass (such as glass with a width of greater than 330mm and a thickness of greater than 30mm). Therefore, the total content of alkaline-earth metal oxides, i.e., BaO+SrO+CaO+MgO, in the present invention is preferably 1-15%, more preferably 1.5-10%, further preferably 1.5-8%. In terms of the type selection of alkaline-earth metal oxide, BaO and/or SrO are preferably the most beneficial for the improvement of glass stability, more preferably BaO, further preferably no CaO and/or MgO.

Traditional barium crown glass uses a large number of alkaline-earth metal oxides to enhance the refractive index of the glass. Based on a large number of experimental researches, the inventor has found that in some implementations, if the value of (BaO+SrO+CaO+MgO)/SiO₂ exceeds 0.25, the refractive index of the glass can easily meet the design requirements, but the glass structure is destroyed and the miscellaneous energy level is increased, resulting in a rapid decrease in UV transmittance. Therefore, the value of (BaO+SrO+CaO+MgO)/SiO₂ in the present invention is preferably below 0.25, more preferably below 0.2, further preferably below 0.15, more further preferably below 0.1. On the other hand, the stability and chemical stability of the glass can be prevented from decreasing by making the value of (BaO+SrO+CaO+MgO)/SiO₂ to be above 0.01. Therefore, the value of (BaO+SrO+CaO+MgO)/SiO₂ is preferably above 0.01, more preferably above 0.02.

An appropriate amount of ZnO can strengthen the network structure of the glass, and enhance the refractive index and UV transmittance of the glass. If the content of ZnO exceeds 20%, the glass phase separation trend will increase, the UV transmittance will instead decrease, and meanwhile the stripe degree will be difficult to meet the design requirements. On the other hand, if the content of ZnO is less than 1%, the effect of enhancing the UV transmittance of the glass will not be obvious, the surface tension of the glass will be increased, the bubble will not be easy to eliminate, and the bubble degree will be difficult to meet the design requirements. Therefore, the content of ZnO is 1-20%, preferably 2-16%, more preferably 3-12%.

La₂O₃, Gd₂O₃, and Y₂O₃ belong to high-refraction low-dispersion oxides, which can quickly enhance the refractive index of the glass and adjust the dispersion of the glass if added into the glass. Based on a large number of researches, the inventor has found that La₂O₃, Gd₂O₃, and Y₂O₃ have a strong concentration in the glass, which can enhance the stability of the glass structure, and enhance the UV transmittance of the glass while enhancing the refractive index; on the other hand, an appropriate amount of La₂O₃, Gd₂O₃, and Y₂O₃ can enhance the UV irradiation resistance capability of the glass, and also decrease the viscosity of the glass, so that the melting, clarification and molding of the glass will be easier and it is more beneficial to obtain high optical uniformity, bubble degree and stripe degree. However, if the content of La₂O₃, Gd₂O₃, and Y₂O₃ is excessive, the glass will become particularly easy to have devitrification, or even glass ceramics will appear in severe cases. Therefore, the total content of La₂O₃, Gd₂O₃, and Y₂O₃ (La₂O₃+Y₂O₃+Gd₂O₃) in the present invention is 4-30%, preferably 5-20%, more preferably 7-15%.

Through continuous experimental research, the inventor has found that in terms of enhancing UV transmittance, La₂O₃ is superior to Y₂O₃, and Y₂O₃ is superior to Gd₂O₃; in terms of enhancing UV irradiation resistance of the glass, La₂O₃ is slightly superior to Gd₂O₃, and Gd₂O₃ superior to Y₂O₃. Therefore, by comprehensively considering the UV transmittance, UV irradiation resistance, anti-devitrification and other performances, the content of La₂O₃ in the present invention is preferably 4-25%, more preferably 6-20%, further preferably 7-14%; the content of Y₂O₃ is preferably 0-10%, more preferably 0-8%, further preferably 0-5%; the content of Gd₂O₃ is preferably 0-8%, more preferably 0-7%, further preferably 0-5%.

Based on a large number of experimental researches, the inventor has found that in some implementations, if the value of (La₂O₃+Y₂O₃+Gd₂O₃)/SiO₂ is higher than 0.35, the stability and anti-devitrification performance of the glass will deteriorate, or even ceramics will be formed during the flow of glass liquid in severe cases. If the value of (La₂O₃+Y₂O₃+Gd₂O₃)/SiO₂ is less than 0.07, the viscosity of the glass at 1400°C will exceed 400P, the bubble degree and stripe degree in the production process will be difficult to meet the design requirements under high viscosity, and meanwhile the UV transmittance of the glass will be difficult to meet the design requirements; more importantly, the structure of the glass will tend to relax, and the UV irradiation resistance performance of the glass will decrease. Therefore, the value of (La₂O₃+Y₂O₃+Gd₂O₃)/SiO₂ is preferably 0.07-0.35, the value of (La₂O₃+Y₂O₃+Gd₂O₃)/SiO₂ is more preferably 0.08-0.3, and the value of (La₂O₃+Y₂O₃+Gd₂O₃)/SiO₂ is further preferably 0.1-0.25.

In some implementations of the present invention, if the value of (La₂O₃+Y₂O₃+Gd₂O₃)/B₂O₃ exceeds 6.0, the anti-devitrification performance of the glass will deteriorate; if the value of (La₂O₃+Y₂O₃+Gd₂O₃)/B₂O₃ is less than 0.3, the chemical stability of the glass will be degraded and the UV transmittance will decrease. Therefore, the value of (La₂O₃+Y₂O₃+Gd₂O₃)/B₂O₃ is preferably 0.3-6.0, more preferably 0.4-5.0, further preferably 0.5-3.0.

Ta₂O₅, Nb₂O₅, TiO₂, and ZrO₂ belong to high-refraction high-dispersion oxides, which can enhance the UV irradiation resistance performance of the glass, and meanwhile can enhance the refractive index and dispersion of the glass if added into the glass. In the present invention, the total content of Ta₂O₅, Nb₂O₅, TiO₂, and ZrO₂ (Ta₂O₅+Nb₂O₅+TiO₂+ZrO₂) is made to be above 0.5% to obtain the effect, and preferably Ta₂O₅+Nb₂O₅+TiO₂+ZrO₂ is above 1%, more preferably above 2%. On the other hand, Ta₂O₅, Nb₂O₅, TiO₂, and ZrO₂ in the glass have the effect of decreasing the UV transmittance. If the total content of Ta₂O₅, Nb₂O₅, TiO₂, and ZrO₂ (Ta₂O₅+Nb₂O₅+TiO₂+ZrO₂) exceeds 20%, the UV transmittance of the glass will be difficult to meet the design requirements, especially the transmittance at 365nm. Therefore, Ta₂O₅+Nb₂O₅+TiO₂+ZrO₂ is below 20%, preferably below 15%, more preferably below 10%.

During the production of glass, if the upper limit of devitrification temperature of the glass exceeds 1300°C, the glass liquid will be easy to be blocked in each connection link of the melting furnace, leading to that the transmittance, internal quality and stripe degree of the glass fail to meet the design requirements. Based on a large number of experimental researches, the inventor has found that in some implementations, by controlling the ratio of the total content of La₂O₃, Y₂O₃, and Gd₂O₃ (La₂O₃+Y₂O₃+Gd₂O₃) to the total content of Ta₂O₅, Nb₂O₅, TiO₂, and ZrO₂ (Ta₂O₅+Nb₂O₅+TiO₂+ZrO₂), i.e., (La₂O₃+Y₂O₃+Gd₂O₃)/(Ta₂O₅+Nb₂O₅+TiO₂+ZrO₂), to be 1.0-13.0, preferably 2.0-10.0, more preferably 3.0-7.0, the upper limit of devitrification temperature of the glass can be decreased, and meanwhile the UV light transmittance and irradiation resistance performance of the glass can be increased.

In some implementations, when the value of La₂O₃/Nb₂O₅ is controlled to be 3.5-15.0, preferably 5.0-14.0, more preferably 7.0-13.5, the UV irradiation resistance performance and stability of the glass are the best.

Li₂O, Na₂O and K₂O, belonging to alkali metal oxide, in the present invention can decrease the high-temperature viscosity of the glass, and provide free oxygen to reinforce the network structure of the glass, thereby enhancing the UV transmittance of the glass. From the perspective of reinforcing glass network structure, the capability of Na₂O and K₂O is the strongest under reasonable content, but K₂O has a stronger capability to decrease the chemical stability of glass than Na₂O, so the content of K₂O needs to be more strictly limited. If the content of Na₂O and K₂O is too high, the volatility of the glass raw materials will be serious in the production process, the stability of the refractive index will be difficult to meet the design requirements, and meanwhile the stability of the glass will deteriorate. Therefore, the content of Na₂O is preferably 2-15%, more preferably 4-14%, further preferably 5-13%; the content of K₂O is preferably 0-8%, more preferably 1-6%, further preferably 2-5%.

The alkali metal oxide Li₂O has the strongest capability to decrease the high-temperature viscosity. When the high-temperature viscosity design fails to meet the requirements, a small amount of Li₂O can be comprised. However, if the content of Li₂O exceeds 5%, the glass devitrification will be serious, and meanwhile the glass molding viscosity will be small, which is difficult to meet the thick specification molding requirements. Therefore, the content of Li₂O is confined to be below 5%, preferably below 4%, more preferably below 3%, further preferably 0%.

In some implementations of the present invention, if the total content of Li₂O, Na₂O, and K₂O (Li₂O+Na₂O+K₂O) is less than 3%, the refractive index temperature coefficient of the glass will increase rapidly, and the refractive index of the glass lens changes more greatly under the condition of the same temperature change amplitude, resulting in a rapid decrease in the imaging quality of the optical system; on the other hand, the glass cannot achieve good bubble degree. If Li₂O+Na₂O+K₂O exceeds 15%, the stability of the glass will decrease rapidly, the structure of the glass will tend to relax, and the UV irradiation resistance performance will decrease. Therefore, Li₂O+Na₂O+K₂O is preferably 3-15%, more preferably 5-14%, further preferably 6-13%.

A small amount of F (fluorine) can enhance the UV transmittance and UV irradiation resistance capacity of the glass. If the content of F exceeds 3%, the volatility in the glass melting process will be large to bring fluctuations in the refractive index of the glass, the optical uniformity of the glass will be difficult to meet the design requirements, and meanwhile it will also bring harm to the production environment and the health of the operator. Therefore, the content of F is controlled to be below 3%, preferably below 2%, more preferably below 1%. In some implementations, if the UV transmittance and UV irradiation resistance performance of the glass has surplus, it more further preferably contains no F.

By comprising one or more components of 0-1% of Sb₂O₃, SnO, SnO₂, CeO₂, Cl, and Br as clarifying agent in the present invention, it can increase the clarifying effect of the glass. The content of the clarifying agent is preferably 0-0.8%, more preferably 0-0.5%. The clarifying agent is preferably Sb₂O₃. When the content of Sb₂O₃ exceeds 1%, the UV transmittance of the glass will decrease.

### <Unnecessary components>

In the glass of the present invention, for the transition metal oxides such as V, Cr, Mn, Fe, Co, Ni, Cu, Ag and Mo, even if they are contained in small amounts in a single or compound form, the glass could be colored and absorb at a specific wavelength in the visible light region, thereby impairing the properties of the present invention in increasing the visible light transmittance, and therefore, in particular, for optical glass with requirement on wavelength transmittance in the visible region, it is preferably not actually included.

Th, Cd, Tl, Os, Be and Se oxides have been used in a controlled manner as a harmful chemical substance in recent years, which is necessary not only in the glass manufacturing process, but also in the processing procedure and disposal after the productization for environmental protection measures. Therefore, in the case of attaching importance to the influence on the environment, it is preferably not actually included except for the inevitable incorporation. As a result, the optical glass does not actually contain a substance that contaminates the environment. Therefore, the optical glass of the present invention can be manufactured, processed, and discarded even if a measure is not taken as a special environmental countermeasure.

In order to achieve environmental friendliness, the optical glass of the present invention preferably does not contain As₂O₃ and PbO.

The terms "not contained" and "0%" as used herein mean that the compound, molecule or element and the like are not intentionally added to the optical glass of the present invention as raw materials; however, as raw materials and/or equipment for the production of optical glass, there will be some impurities or components that are not intentionally added in small or trace amounts in the final optical glass, and this situation also falls within the protection scope of the present invention patent.

Hereinafter, the performance of the optical glass provided by the present invention will be described.

### <Refractive index and Abbe number>

The refractive index (n_{d}) and Abbe number (ν_{d}) of the optical glass is tested as per the method specified in *GB*/*T 7962.1-2010.*

In some implementations, the lower limit of the refractive index (n_{d}) of the optical glass provided by the present invention is 1.51, preferably 1.52, more preferably 1.53. In some implementations, the upper limit of the refractive index (n_{d}) of the optical glass provided by the present invention is 1.58, preferably 1.57, more preferably 1.56.

In some implementations, the lower limit of the Abbe number (v_{d}) of the optical glass provided by the present invention is 55, preferably 56, more preferably 57. In some implementations, the upper limit of the Abbe number (v_{d}) of the optical glass provided by the present invention is 65, preferably 63, more preferably 60.

### <Water resistance stability>

The water resistance stability (D_{W}) (powder method) of the optical glass is tested as per the method specified in GB/T 17129.

In some implementations, the water resistance stability (D_{W}) of the optical glass provided by the present invention is above Class 2, preferably Class 1.

### <Acid resistance stability>

The acid resistance stability (D_{A}) (powder method) of the optical glass is tested as per the method specified in GB/T 17129.

In some implementations, the acid resistance stability (D_{A}) of the optical glass provided by the present invention is above Class 3, preferably Class 2, more preferably Class 1.

### <Refractive index temperature coefficient>

For the refractive index temperature coefficient (dn/dt) of the optical glass, the refractive index temperature coefficient of the optical glass at 40-60°C is tested according to the method specified in *GB*/*T 7962.4-2010* (d line dn/dtrelative(10⁻⁶/°C)).

In some implementations, the refractive index temperature coefficient (dn/dt) of the optical glass provided by the present invention is below 8.0×10⁻⁶/°C, preferably below 7.0×10⁻⁶/°C, more preferably below 6.0×10⁻⁶/°C.

### <Internal transmittance at 365nm τ₃₆₅ₙₘ>

The UV transmittance of the optical glass provided by the present invention is characterized by the internal transmittance at 365nm, the internal transmittance at 365nm (τ₃₆₅ₙₘ) is tested according to the method specified in GB/T7962.12-2010*,* and the thickness of the glass sample is 10mm.

In some implementations, the internal transmittance at 365nm (τ₃₆₅ₙₘ) of the optical glass provided by the present invention is above 99.0%, preferably above 99.2%, more preferably above 99.4%, further preferably above 99.5%.

### <UV irradiation attenuation resistance performance of internal transmittance at 365nm>

The UV irradiation resistance performance of the optical glass is characterized by Δτ₃₆₅ₙₘ, that is, the UV irradiation resistance performance of internal transmittance at 365nm, and the test method is as follows: test the original internal transmittance of the sample at 365nm τ₃₆₅ₙₘ₋₁ according to the method specified in *GB*/*T7962.12-2010*, then use high-pressure mercury lamp for irradiation with power density of the glass surface as 1 W/cm², and test the internal transmittance at 365nm τ₃₆₅ₙₘ₋₂ again according to the method specified in GB/T7962.12-2010 after 2 hours of irradiation. The difference between the two tests τ₃₆₅ₙₘ₋₁-τ₃₆₅ₙₘ₋₂ is the attenuation of the glass at this wavelength, and the thickness of the glass sample is 10mm.

In some implementations, the UV irradiation attenuation resistance performance of internal transmittance at 365nm Δτ₃₆₅ₙₘ) of the optical glass provided by the present invention is below 5.0%, preferably below 2.0%, more preferably below 1.0%.

### <Upper limit of devitrification temperature>

The devitrification performance of the glass is measured by a temperature gradient furnace method which comprises the following steps: processing the glass into 180mm×10mm×10mm samples, polishing lateral sides, placing the samples into a furnace having a temperature gradient (10°C/cm) and heating up to 1400°C in the highest temperature zone, taking out the samples for cooling to room temperature after keeping the temperature for 4 hours, and observing the devitrification of the glass under a microscope, wherein the maximum temperature corresponding to the appearance of crystal in the glass is the upper limit of devitrification temperature of the glass.

In some implementations, the upper limit of devitrification temperature of the optical glass provided by the present invention is below 1300°C, preferably below 1280°C, more preferably below 1250°C, further preferably below 1230°C.

### <Bubble degree>

The bubble degree of the optical glass is measured and graded as per the method specified in *GB*/*T7962.8-2010.*

In some implementations, the bubble degree of the optical glass provided by the present invention is above Grade A, preferably above Grade A₀, more preferably Grade A₀₀.

### <Stripe degree>

The test method for stripe degree of the optical glass is as follows: use a stripe instrument composed of a point light source and a lens to compare with the standard sample from the direction where the stripe is most easily seen. The stripe degree is divided into four levels as shown in Table 1.

**Table 1 Grading Standard of Stripe Degree**

| Grade | Stripe degree |
|---|---|
| A | Without visible stripe under specified testing conditions |
| B | With small and scattered stripes under specified conditions |
| C | With slightly parallel stripes under specified conditions |
| D | With roughly parallel stripes under specified conditions |

In some implementations, the stripe degree of the optical glass provided by the present invention is above Grade C, preferably above Grade B.

### <Optical uniformity>

The optical uniformity of the optical glass is expressed by the maximum refractive index deviation Δn_{d} in each part of a glass sample, and it is tested according to the test method specified in *GB*/*T 7962.2-2010.*

In some implementations, Δn_{d} value of the optical glass provided by the present invention is below 5×10⁻⁶, preferably below 3×10⁻⁶, more preferably below 2×10⁻⁶.

### [Manufacturing method of optical glass]

The manufacturing method of the optical glass provided by the present invention is as follows: The glass of the present invention is made of conventional raw materials with conventional process. Use carbonate, nitrate, sulfate, hydroxide and oxide as raw materials, mix the ingredients according to the conventional method, and then feed the mixed furnace burden into a 1200-1600°C smelting furnace (e.g., platinum crucible, quartz crucible) for melting. Later, obtain homogeneous melted glass without bubbles and undissolved substances after clarification, stirring and homogenization, shape the molten glass in a mould and perform annealing. Those skilled in the art can appropriately select raw materials, process methods and process parameters according to actual needs.

### [Glass preform and optical element]

The glass preform can be made from the optical glass formed by, for example, direct drop forming, grinding or thermoforming, and other compression molding means. That is to say, the precision glass preform can be made by direct precision drop molding of molten optical glass, or glass preform can be made by grinding and other machining methods, or the glass preform can be made by making a preform for compression molding with the optical glass, re-thermoforming this preform, and then grinding the preform. It should be noted that the means for preparing glass preform is not limited to the above means.

As mentioned above, the optical glass of the present invention is useful for various optical elements and optical designs, wherein the particularly preferred method is to form a preform by the optical glass of the present invention, and use this preform for re-thermoforming, precision stamping and the like to make optical elements such as lens and prism.

The glass preform and the optical element of the present invention are both formed by the optical glass of the present invention described above. The glass preform of the present invention has excellent characteristics of the optical glass; the optical element of the present invention has excellent characteristics of the optical glass, and can provide such optical elements as a variety of lenses and prisms having a high optical value.

Examples of the lens include various lenses with spherical or aspheric surfaces, such as concave meniscus lens, convex meniscus lens, biconvex lens, biconcave lens, planoconvex lens and planoconcave lens.

### [Optical instrument]

The optical element formed by the optical glass of the present invention can make optical instruments such as photographic equipment, camera equipment, projector equipment, display equipment, lithography machine, on-board equipment and monitoring equipment.

### Embodiment

### <Optical glass embodiment>

The following non-limiting embodiments are provided in order to further clearly explain and illustrate the technical solution of the present invention.

This embodiment obtains the optical glass with composition as shown in Table 2 to Table 3 by the manufacturing method of the above-mentioned optical glass. In addition, the characteristics of each glass are measured by the test method described in the present invention, and the measurement results are shown in Table 2 to Table 3.

**Table 2.**

| Embodiment (wt%) | 1# | 2# | 3# | 4# | 5# | 6# | 7# |
|---|---|---|---|---|---|---|---|
| SiO₂ | 60.0 | 55.0 | 59.1 | 57.0 | 65.0 | 60.6 | 59.0 |
| B₂O₃ | 10.0 | 15.0 | 11.0 | 12.0 | 5.0 | 10.0 | 11.0 |
| BaO | 2.0 | 1.2 | 1.0 | 2.0 | 1.0 | 2.5 | 1.2 |
| Sro | 0.0 | 0.8 | 1.0 | 1.3 | 1.0 | 0.0 | 0.8 |
| CaO | 0.0 | 0.0 | 0.0 | 0.2 | 0.2 | 0.0 | 0.1 |
| MgO | 0.0 | 0.0 | 0.0 | 0.0 | 0.5 | 0.0 | 0.2 |
| ZnO | 5.0 | 6.0 | 4.6 | 4.0 | 4.0 | 10.0 | 4.5 |
| La₂O₃ | 12.0 | 11.0 | 11.0 | 10.0 | 10.0 | 6.0 | 6.2 |
| Gd₂O₃ | 0.0 | 0.0 | 1.0 | 2.0 | 3.1 | 1.0 | 1.0 |
| Y₂O₃ | 0.0 | 1.0 | 0.0 | 0.0 | 1.0 | 1.0 | 1.0 |
| TiO₂ | 0.1 | 0.0 | 0.0 | 0.0 | 0.0 | 0.0 | 0.0 |
| Nb₂O₅ | 1.2 | 0.8 | 0.8 | 0.8 | 1.0 | 1.1 | 0.9 |
| Ta₂O₅ | 0.0 | 0.0 | 1.0 | 0.0 | 0.0 | 0.2 | 3.8 |
| ZrO₂ | 0.1 | 0.2 | 0.2 | 0.2 | 0.1 | 0.5 | 0.2 |
| Li₂O | 0.0 | 0.0 | 0.0 | 0.0 | 0.5 | 0.0 | 0.0 |
| Na₂O | 6.4 | 7.0 | 6.5 | 7.0 | 5.0 | 4.8 | 6.5 |
| K₂O | 3.0 | 1.4 | 2.5 | 3.0 | 2.0 | 1.9 | 2.9 |
| Al₂O₃ | 0.1 | 0.5 | 0.2 | 0.2 | 0.5 | 0.1 | 0.5 |
| F | 0.0 | 0.0 | 0.0 | 0.2 | 0.0 | 0.2 | 0.1 |
| Sb₂O₃ | 0.1 | 0.1 | 0.1 | 0.1 | 0.1 | 0.1 | 0.1 |
| Total | 100.0 | 100.0 | 100.0 | 100.0 | 100.0 | 100.0 | 100.0 |
| (B₂O₃+Al₂O₃)/SiO₂ | 0.17 | 0.28 | 0.19 | 0.21 | 0.08 | 0.17 | 0.19 |
| BaO+SrO+CaO+MgO | 2.0 | 2.0 | 2.0 | 3.5 | 2.7 | 2.5 | 2.3 |
| (BaO+SrO+CaO+MgO)/SiO₂ | 0.03 | 0.04 | 0.03 | 0.06 | 0.04 | 0.04 | 0.04 |
| (La₂O₃+Y₂O₃+Gd₂O₃)/SiO₂ | 0.20 | 0.22 | 0.20 | 0.21 | 0.22 | 0.13 | 0.14 |
| (La₂O₃+Y₂O₃+Gd₂O₃)/ B₂O₃ | 1.20 | 0.80 | 1.09 | 1.00 | 2.82 | 0.80 | 0.75 |
| Ta₂O₅+Nb₂O₅+TiO₂+ZrO₂ | 1.40 | 1.00 | 2.00 | 1.00 | 1.10 | | 4.90 |
| (La₂O₃+Y₂O₃+Gd₂O₃)/(Ta₂O₅+Nb₂O₅+TiO₂+ZrO ₂) | 8.57 | 12.00 | 6.00 | 12.00 | 12.82 | 4.44 | 1.67 |
| La₂O₃/Nb₂O₅ | 10.00 | 13.75 | 13.75 | 12.50 | 10.00 | 5.45 | 6.89 |
| Li₂O+Na₂O+K₂O | 9.40 | 8.40 | 9.00 | 10.00 | 7.50 | 6.70 | 9.40 |
| La₂O₃+Y₂O₃+Gd₂O₃ | 12.0 | 12.0 | 12.0 | 12.0 | 14.1 | 8.0 | 8.2 |
| n_{d} | 1.5415 4 | 1.5434 3 | 1.5436 8 | 1.5469 8 | 1.5474 7 | 1.536 8 | 1.5410 2 |
| ν_{d} | 59.71 | 59.92 | 59.42 | 59.55 | 59.57 | 58.99 | 58.36 |
| τ₃₆₅ₙₘ(%) | 99.1 | 99.1 | 99.5 | 99.6 | 99.7 | 99.2 | 99.9 |
| Δτ₃₆₅ₙₘ(%) | 0.1 | 0.3 | 0.2 | 0.2 | 0.2 | 0.2 | 0.2 |
| Δn_{d}(×10⁻⁶) | 1.5 | 2.0 | 1.1 | 1.8 | 2.5 | 3.0 | 1.2 |
| dn/dt(×10⁻⁶/°C) | 2.8 | 2.4 | 3.2 | 2.6 | 3.8 | 4 | 2.9 |
| D_{A} | Class 1 | Class 1 | Class 1 | Class 1 | Class 1 | Class 1 | Class 1 |
| D_{W} | Class 1 | Class 1 | Class 1 | Class 1 | Class 1 | Class 1 | Class 1 |
| Upper limit of devitrification temperature (°C) | 1260 | 1230 | 1260 | 1280 | 1290 | 1260 | 1180 |
| Bubble degree | A₀₀ | A₀₀ | A₀₀ | A₀₀ | A₀₀ | A₀₀ | A₀₀ |
| Stripe degree (Grade) | B | B | B | B | B | B | B |

**Table 3.**

| Embodiment (wt%) | 8# | 9# | 10# | 11# | 12# | 13# |
|---|---|---|---|---|---|---|
| SiO₂ | 65.0 | 56.0 | 69.0 | 55.5 | 62.0 | 58.0 |
| B₂O₃ | 4.0 | 9.0 | 15.0 | 3.0 | 8.0 | 10.0 |
| BaO | 0.5 | 6.5 | 1.0 | 1.0 | 1.5 | 1.0 |
| SrO | 0.5 | 2.0 | 0.0 | 1.0 | 0.5 | 0.5 |
| CaO | 0.0 | 0.5 | 0.0 | 0.5 | 0.0 | 0.5 |
| MgO | 0.0 | 0.2 | 0.0 | 0.5 | 0.0 | 0.0 |
| ZnO | 4.0 | 4.0 | 2.5 | 12.0 | 4.5 | 5.5 |
| La₂O₃ | 6.5 | 6.0 | 5.1 | 13.0 | 6.0 | 5.5 |
| Gd₂O₃ | 2.5 | 1.0 | 0.0 | 1.5 | 2.0 | 2.5 |
| Y₂O₃ | 2.0 | 1.0 | 0.0 | 2.0 | 0.5 | 1.0 |
| TiO₂ | 0.0 | 0.0 | 0.0 | 0.0 | 0.0 | 0.0 |
| Nb₂O₅ | 0.9 | 1.5 | 0.5 | 2.0 | 1.2 | 0.9 |
| Ta₂O₅ | 4.3 | 2.0 | 1.0 | 1.2 | 4.1 | 4.0 |
| ZrO₂ | 0.2 | 1.0 | 0.5 | 0.5 | 0.2 | 0.2 |
| Li₂O | 1.5 | 0.2 | 1.0 | 0.0 | 0.0 | 1.5 |
| Na₂O | 4.5 | 6.0 | 2.0 | 3.0 | 6.5 | 6.0 |
| K₂O | 2.5 | 2.8 | 0.8 | 2.0 | 2.2 | 2.4 |
| Al₂O₃ | 0.5 | 0.2 | 0.5 | 1.0 | 0.5 | 0.2 |
| F | 0.5 | 0.0 | 1.0 | 0.2 | 0.2 | 0.2 |
| Sb₂O₃ | 0.1 | 0.1 | 0.1 | 0.1 | 0.1 | 0.1 |
| Total | 100.0 | 100.0 | 100.0 | 100.0 | 100.0 | 100.0 |
| (B₂O₃+Al₂O₃)/SiO₂ | 0.07 | 0.16 | 0.22 | 0.07 | 0.14 | 0.18 |
| BaO+SrO+CaO+MgO | 1.0 | 9.2 | 1.0 | 3.0 | 2.0 | 2.0 |
| (BaO+SrO+CaO+MgO)/SiO₂ | 0.02 | 0.16 | 0.01 | 0.05 | 0.03 | 0.03 |
| (La₂O₃+Y₂O₃+Gd₂O₃)/ SiO₂ | 0.17 | 0.14 | 0.07 | 0.30 | 0.14 | 0.16 |
| (La₂O₃+Y₂O₃+Gd₂O₃)/ B₂O₃ | 2.75 | 0.89 | 0.34 | 5.50 | 1.06 | 0.90 |
| Ta₂O₅+Nb₂O₅+TiO₂+ZrO₂ | 5.40 | 4.50 | 2.00 | 3.70 | 5.50 | 5.10 |
| (La₂O₃+Y₂O₃+Gd₂O₃)/(Ta₂O₅+Nb₂O₅+TiO₂+ZrO₂) | 2.04 | 1.78 | 2.55 | 4.46 | 1.55 | 1.76 |
| La₂O₃/Nb₂O₅ | 7.22 | 4.00 | 10.20 | 6.50 | 5.00 | 6.11 |
| Li₂O+Na₂O+K₂O | 8.50 | 9.00 | 3.80 | 5.00 | 8.70 | 9.90 |
| La₂O₃+Y₂O₃+Gd₂O₃ | 11.0 | 8.0 | 5.1 | 16.5 | 8.5 | 9.0 |
| n_{d} | 1.53913 | 1.56139 | 1.52071 | 1.57824 | 1.53862 | 1.5421 |
| Vd | 59.01 | 57.59 | 64.34 | 55.05 | 59.11 | 58.73 |
| τ₃₆₅ₙₘ(%) | 99.8 | 99.0 | 99.3 | 99.1 | 99.7 | 99.8 |
| Δτ₃₆₅ₙₘ(%) | 0.1 | 0.4 | 0.4 | 0.1 | 0.2 | 0.2 |
| Δn_{d}(×10⁻⁶) | 2.1 | 1.6 | 4.2 | 1.5 | 1.7 | 1.4 |
| dn/dt(×10⁻⁶/°C) | 2.8 | 2.4 | 3.1 | 3.4 | 3.7 | 3.1 |
| D_{A} | Class 1 | Class 1 | Class 1 | Class 1 | Class 1 | Class 1 |
| D_{W} | Class 1 | Class 1 | Class 1 | Class 1 | Class 1 | Class 1 |
| Upper limit of devitrification temperature (°C) | 1240 | 1100 | 1200 | 1270 | 1190 | 1160 |
| Bubble degree | A₀₀ | A₀₀ | A₀ | A₀₀ | A₀₀ | A₀₀ |
| Stripe degree (Grade) | B | B | C | B | B | B |

### <Glass preform embodiment>

The glass obtained by Embodiments 1-13 of the optical glass is made into a variety of lenses and prisms and other preforms such as concave meniscus lens, convex meniscus lens, biconvex lens, biconcave lens, planoconvex lens, and planoconcave lens by means of, for example, grinding, or re-thermoforming, precision stamping and other compression molding methods.

### <Optical element embodiment>

The preforms obtained in the above-mentioned glass preform embodiment are annealed for fine-tuning of refractive index while reducing the stress inside the glass, so that the optical characteristics such as the refractive index are brought to the desired values.

Then, each of the preforms is ground and polished, and a variety of lenses and prisms such as concave meniscus lens, convex meniscus lens, biconvex lens, biconcave lens, planoconvex lens, and planoconcave lens are prepared. An antireflection film may be coated on the surface of the obtained optical element.

### <Embodiments of optical instrument>

Through optical design and the use of one or more optical elements to form optical component or optical assembly, the optical element prepared by the above-mentioned optical element embodiment can be used, for example, in imaging device, sensor, microscope, medical technology, digital projection, communication, optical communication technology/information transmission, optics/lighting in the automobile field, photolithography, excimer laser, wafer, computer chip, and integrated circuit and electronic device including such circuit and chip.

## Claims

1. An optical glass, wherein the components are represented by weight percentage, comprising: SiO₂ is 55-70%; B₂O₃ is 2-18%; ZnO is 1-20%; La₂O₃+Y₂O₃+Gd₂O₃ is 4-30%; Ta₂O₅+Nb₂O₅+TiO₂+ZrO₂ is 0.5-20%; Li₂O+Na₂O+K₂O is 3-15%, in which (La₂O₃+Y₂O₃+Gd₂O₃)/(Ta₂O₅+Nb₂O₅+TiO₂+ZrO₂) is 1.0-13.0.

2. The optical glass according to claim 1, wherein the components are represented by weight percentage, further comprising: 0-15% of BaO+SrO+CaO+MgO; and/or 0-5% of Al₂O₃; and/or 0-3% of F; and/or 0-1% of clarifying agent, and the clarifying agent is one or more of Sb₂O₃, SnO, SnO₂, CeO₂, Cl and Br.

3. An optical glass, wherein the components are represented by weight percentage, consisting of: 55-70% of SiO₂; 2-18% of B₂O₃; 1-20% of ZnO, 4-30% of La₂O₃+Y₂O₃+Gd₂O₃; 0.5-20% of Ta₂O₅+Nb₂O₅+TiO₂+ZrO₂; 3-15% of Li₂O+Na₂O+K₂O; 0-15% of BaO+SrO+CaO+MgO; 0-5% of Al₂O₃; 0-3% of F; and 0-1% of clarifying agent, and the clarifying agent is one or more of Sb₂O₃, SnO, SnO₂, CeO₂, Cl and Br.

4. The optical glass according to any of claims 1-3, wherein the components are represented by weight percentage, in which: (La₂O₃+Y₂O₃+Gd₂O₃)/(Ta₂O₅+Nb₂O₅+TiO₂+ZrO₂) is 1.0-13.0, preferably (La₂O₃+Y₂O₃+Gd₂O₃)/(Ta₂O₅+Nb₂O₅+TiO₂+ZrO₂) is 2.0-10.0, more preferably (La₂O₃+Y₂O₃+Gd₂O₃)/(Ta₂O₅+Nb₂O₅+TiO₂+ZrO₂) is 3.0-7.0.

5. The optical glass according to any of claims 1-3, wherein the components are represented by weight percentage, in which: La₂O₃/Nb₂O₅ is 3.5-15.0, preferably La₂O₃/Nb₂O₅ is 5.0-14.0, more preferably La₂O₃/Nb₂O₅ is 7.0-13.5.

6. The optical glass according to any of claims 1-3, wherein the components are represented by weight percentage, in which: (La₂O₃+Y₂O₃+Gd₂O₃)/SiO₂ is 0.07-0.35, preferably (La₂O₃+Y₂O₃+Gd₂O₃)/SiO₂ is 0.08-0.3, more preferably (La₂O₃+Y₂O₃+Gd₂O₃)/SiO₂ is 0.1-0.25.

7. The optical glass according to any of claims 1-3, wherein the components are represented by weight percentage, in which: (B₂O₃+Al₂O₃)/SiO₂ is 0.05-0.4, preferably (B₂O₃+Al₂O₃)/SiO₂ is 0.08-0.35, more preferably (B₂O₃+Al₂O₃)/SiO₂ is 0.1-0.3.

8. The optical glass according to any of claims 1-3, wherein the components are represented by weight percentage, in which: (BaO+SrO+CaO+MgO)/SiO₂ is 0.01-0.25, preferably (BaO+SrO+CaO+MgO)/SiO₂ is 0.01-0.2, more preferably (BaO+SrO+CaO+MgO)/SiO₂ is 0.02-0.15, further preferably (BaO+SrO+CaO+MgO)/SiO₂ is 0.02-0.1.

9. The optical glass according to any of claims 1-3, wherein the components are represented by weight percentage, in which: (La₂O₃+Y₂O₃+Gd₂O₃)/B₂O₃ is 0.3-6.0, preferably (La₂O₃+Y₂O₃+Gd₂O₃)/B₂O₃ is 0.4-5.0, more preferably (La₂O₃+Y₂O₃+Gd₂O₃)/B₂O₃ is 0.5-3.0.

10. The optical glass according to any of claims 1-3, wherein the components are represented by weight percentage, in which: SiO₂ is 56-68%, preferably SiO₂ is 57-67%; and/or B₂O₃ is 4-16%, preferably B₂O₃ is 5-15%; and/or ZnO is 2-16%, preferably ZnO is 3-12%; and/or La₂O₃+Y₂O₃+Gd₂O₃ is 5-20%, preferably La₂O₃+Y₂O₃+Gd₂O₃ is 7-15%; and/or Ta₂O₅+Nb₂O₅+TiO₂+ZrO₂ is 1-15%, preferably Ta₂O₅+Nb₂O₅+TiO₂+ZrO₂ is 2-10%; and/or Li₂O+Na₂O+K₂O is 5-14%, preferably Li₂O+Na₂O+K₂O is 6-13%; and/or BaO+SrO+CaO+MgO is 1-15%, preferably BaO+SrO+CaO+MgO is 1.5-10%, more preferably BaO+SrO+CaO+MgO is 1.5-8%; and/or Al₂O₃ is 0-4%, preferably Al₂O₃ is 0-3%; and/or F is 0-2%, preferably F is 0-1%; and/or clarifying agent is 0-0.8%, preferably clarifying agent is 0-0.5%, and the clarifying agent is one or more of Sb₂O₃, SnO, SnO₂, CeO₂, Cl and Br.

11. The optical glass according to any of claims 1-3, wherein the components are represented by weight percentage, in which: La₂O₃ is 4-25%, preferably La₂O₃ is 6-20%, more preferably La₂O₃ is 7-14%; and/or Gd₂O₃ is 0-8%, preferably Gd₂O₃ is 0-7%, more preferably Gd₂O₃ is 0-5%; and/or Y₂O₃ is 0-10%, preferably Y₂O₃ is 0-8%, more preferably Y₂O₃ is 0-5%; and/or Na₂O is 2-15%, preferably Na₂O is 4-14%, more preferably Na₂O is 5-13%; and/or K₂O is 0-8%, preferably K₂O is 1-6%, more preferably K₂O is 2-5%; and/or Li₂O is 0-5%, preferably Li₂O is 0-4%, more preferably Li₂O is 0-3%.

12. The optical glass according to any of claims 1-3, wherein the components do not contain F; and/or do not contain MgO; and/or do not contain CaO; and/or do not contain Li₂O.

13. The optical glass according to any of claims 1-3, wherein a refractive index n_{d} of the optical glass is 1.51-1.58, preferably 1.52-1.57, more preferably 1.53-1.56, and/or an Abbe number v_{d} is 55-65, preferably 56-63, more preferably 57-60.

14. The optical glass according to any of claims 1-3, wherein τ₃₆₅ₙₘ of the optical glass is above 99.0%, preferably above 99.2%, more preferably above 99.4%, further preferably above 99.5%, and/or Δτ₃₆₅ₙₘ is below 5.0%, preferably below 2.0%, more preferably below 1.0%.

15. The optical glass according to any of claims 1-3, wherein a water resistance stability D_{W} of the optical glass is above Class 2, preferably Class 1; and/or an acid resistance stability D_{A} is above Class 3, preferably above Class 2, more preferably Class 1; and/or a refractive index temperature coefficient dn/dt is below 8.0×10⁻⁶/°C, preferably below 7.0×10⁻⁶/°C, more preferably below 6.0×10⁻⁶/°C, and/or an upper limit of devitrification temperature is below 1300°C, preferably below 1280°C, more preferably below 1250°C, further preferably below 1230°C; and/or bubble degree is above Grade A, preferably above Grade A₀, more preferably Grade A₀₀; and/or stripe degree is above Grade C, preferably above Grade B; and/or Δn_{d} value is below 5×10⁻⁶, preferably below 3×10⁻⁶, more preferably below 2×10⁻⁶.

16. A glass preform, made of the optical glass according to any of claims 1-15.

17. An optical element, made of the optical glass according to any of claims 1-15 or made of the glass preform according to claim 16.

18. An optical instrument, comprising the optical glass according to any of claims 1-15, and/or the optical element according to claim 17.
